Europäisches Patentamt

European Patent Office

Office européen des brevets

(19)

(11) Publication number: **0 388 818 B1**

## EUROPEAN PATENT SPECIFICATION

(12)

(45) Date of publication of patent specification: **30.11.94**  (51) Int. Cl.5: **B05C 5/02**

(21) Application number: **90105036.9**

(22) Date of filing: **16.03.90**

The file contains technical information submitted after the application was filed and not included in this specification

(54) **Coating apparatus.**

(30) Priority: **20.03.89 JP 69062/89**
**24.03.89 JP 73009/89**

(43) Date of publication of application:
**26.09.90 Bulletin 90/39**

(45) Publication of the grant of the patent:
**30.11.94 Bulletin 94/48**

(84) Designated Contracting States:
**DE**

(56) References cited:
**DE-A- 3 144 655**
**DE-A- 3 733 031**

(73) Proprietor: **KONICA CORPORATION**
**26-2, Nishishinjuku 1-chome,**
**Shinjuku-ku**
**Tokyo 160 (JP)**

(72) Inventor: **Umemura, Masahiro**
**Konica Corporation,**
**1 Sakura-machi**
**Hino-shi, Tokyo (JP)**
Inventor: **Kawahara, Setsuko**
**Konica Corporation,**
**1 Sakura-machi**

**Hino-shi, Tokyo (JP)**
Inventor: **Namiki, Takemasa**
**Konica Corporation,**
**1 Sakura-machi**
**Hino-shi, Tokyo (JP)**
Inventor: **Tobisawa, Seiichi**
**Konica Corporation,**
**1 Sakura-machi**
**Hino-shi, Tokyo (JP)**
Inventor: **Kawabe, Shigetoshi**
**Konica Corporation,**
**1 Sakura-machi**
**Hino-shi, Tokyo (JP)**
Inventor: **Nakajima, Takeshi**
**Konica Corporation,**
**1 Sakura-machi**
**Hino-shi, Tokyo (JP)**
Inventor: **Nakano, Yasushi**
**Konica Corporation,**
**1 Sakura-machi**
**Hino-shi, Tokyo (JP)**
Inventor: **Koyama, Noboru**
**Konica Corporation,**
**1 Sakura-machi**
**Hino-shi, Tokyo (JP)**

EP 0 388 818 B1

(74) Representative: **Henkel, Feiler, Hänzel & Partner**
**ner**
**Möhlstrasse 37**
**D-81675 München (DE)**

## Description

This invention relates to an extrusion type coating apparatus and particularly to a coating apparatus capable to carrying out a coating operation without trouble even under the high-speed coating conditions when manufacturing magnetic recording media.

As for the coating systems, there have been well known various systems including a roll-coat system, a gravure-coat system, an extrusion-coat system, a slide-bead-coat system, and a curtain-coat system.

Magnetic recording media may be obtained by coating a magnetic coating solution on a support. The coating systems applicable therefor include, generally, the roll-coat, gravure-coat and extrusion-coat systems. Among these systems, the extrusion-coat system is superior to others, because a uniform thickness of coated-layers can be obtained.

In recent years, on the other hand, magnetic recording media have been rapidly improved, and oxidized magnetic powder with a high BET value and barium ferrite materials have been intentionally tried to use, so that coating solutions have been highly thickened. Further, with the purpose of improving productivity, there have been increasing demands for high-speed coating operations.

As for the extrusion-coat systems mainly for preparing magnetic recording media, there are known conventional techniques such as those described in JP-A-57-84771, JP-A-58-104666 and JP-A-60-238179.

In recent years, magnetic recording media have been tried to be multilayered, because they have been tried to have a higher density and thinner layers or an enhanced data storage. To meet these requirements, there have been proposed for double-layer coating apparatuses such as that described in JP-A-63-88080, as a coating apparatus applicable to the extrusion coat systems.

In the above-mentioned extrusion coat systems, a uniform thickness of coated layers can firmly be obtained. However, satisfactory coating conditions may be obtained only within a limited range. Accordingly, there may be often instances where a desirable coating operation may hardly be made under the above-described high-speed coating conditions.

The defects which will happen seriously in coating operations and particularly in thin-layer coating operations (for making a layer not thicker than 30 $\mu$m) include, for example, a defect in which a coated area is blanked out by adhering or catching foreign matter having adhered onto the support, dusts, or coagula mixed in a coating solution onto a back edge surface; another defect in which a layer thickness becomes partly thicker stripewise; and a further defect in which the support is scratched by the front edge portion and particularly by the square portion of the downstream end of the front edge surface so that shavings of the support base may adhere. Particularly in case of using a highly viscous coating solution, a cross-streak defect is liable to occur by vibration of the support, resulting in noise or uneven fluctuations of output.

To solve the above-mentioned problems, various countermeasures have been taken. A typical example thereof is the technique described in JP-A-60-238179 (hereinafter referred to as Prior Art 1)

In Prior Art 1, a bubble or pin-hole defect appearing after coating is prevented in the manner that, when the support is travelling, air being sucked into from the gap between the surface of a support and a front edge surface is prevented by pressing the support to the downstream end of the front edge surface.

In this Prior Art 1, however, the travelling angle of a support is suddenly changed at the downstream end of the front edge surface, so that the contact pressure of the support with the downstream end thereof may be concentrated on the downstream end and the support surface is scraped by the downstream end, so that there may be troubles of high frequency caused by shavings of the support base adhering to the coated surface.

On the other hand, the double-layer coating apparatus cited in JP-A-63-88080 (hereinafter referred to as Prior Art 2) is also based on the same idea as in the above-described Prior Art 1, so that the adhesion of support base shavings cannot be avoided.

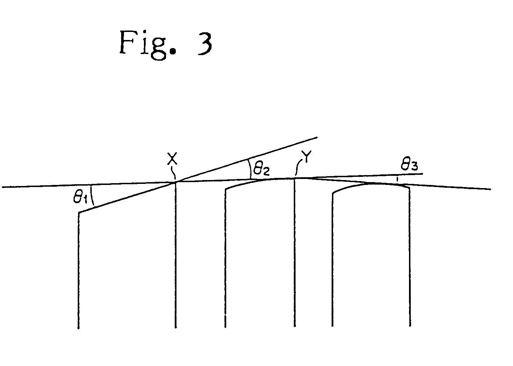

In other words, in the above-cited Publication, it is regarded to be preferable that, in Fig. 3, $\theta_1$, $\theta_2$ and $\theta_3$ each have the following relations:

$0.5° < \theta_1 \leqq 35°$
$0° < \theta_2 \leqq 25°$
$0° < \theta_3 \leqq 20°$

However, only in the above relations, it is liable to produce base shavings at downstream end X of a front edge surface and to scrape the first layer coating solution away from the downstream end of a center edge surface.

Even though the above-mentioned problems may be partly solved by reducing the contact pressure of the head surface of a coating apparatus with a support, the contact pressure should be increased to some extent when a high-speed coating is stably made. In this case, the above-described problems still remain unsolved.

It is therefore a principal object of the invention to provide a coating apparatus capable of firmly preventing the adhesion of support base shavings and bubble or pinhole defects in a support surface caused by sucking air into the interface between layers.

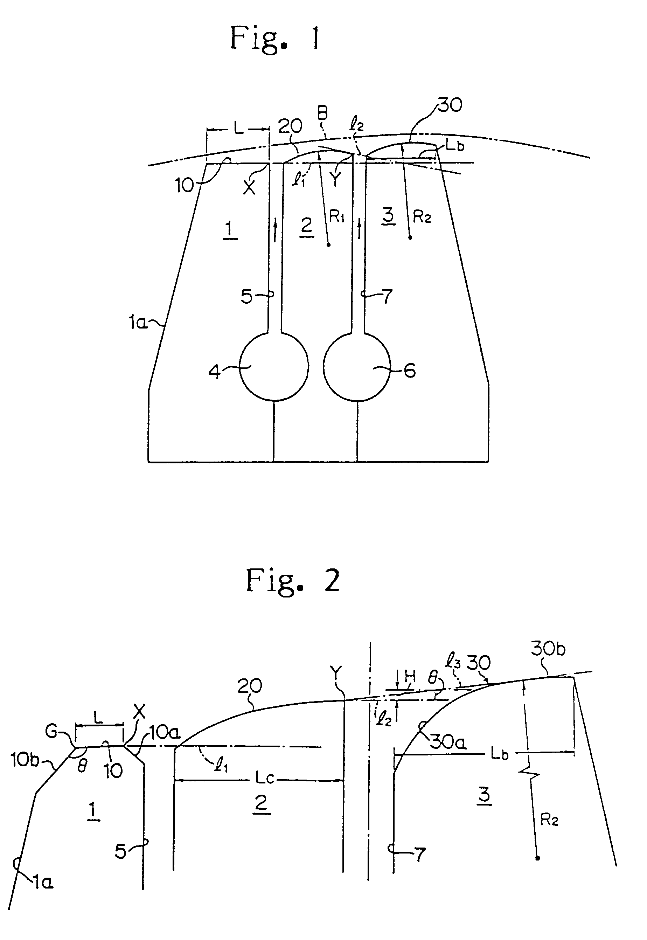

Fig. 1 is a transverse cross-sectional view of an example of the invention. Fig. 2 is a transverse cross-sectional view of the substantial portions of a modified example. Fig. 3 is a transverse cross-sectional view of a coating apparatus relating to Prior Art 2.

In the coating apparatus of the invention a coating solution is extruded continuously from a first slot provided by a gap between a front and a center edge and the second slot provided by a gap between the center and a back edge so that the coating solution is coated to the surface of a flexible support which is continuously travelling in succession along the front, center and back edge surfaces; wherein the front edge surface has a straight portion having a length of not longer than 1 mm at least at the terminal end of the surface in travelling direction of the support, at least one portion of the center and back edge surfaces protrudes from an extended line of the straight portion to the support side and a portion of said back edge protrudes toward said support beyond a tangent line to the downstream end of said center edge surface.

In this invention, as shown in Fig. 1, front edge surface 10 has a straight portion and at least one portion of center edge surface 20 and the back edge surface 30 protrudes from extended line $\ell_1$ of the straight portion to the side of support B. Therefore, the working force of support B to the edge surfaces is partly distributed to front end G of the front edge surface and center and back edge surfaces 20 and 30 through coating solutions respectively, and the contact force of the terminal end X of front edge surface 10 with support B will almost be eliminated, so that base shaving defects may be prevented without lifting support B away from the terminal end X.

On the other hand, support B approaches front end G of front edge surface 10 and is then pressed to the front end G. Therefore, air sucked in from support B into the interface between the layers may be prevented.

If this is the case, it may probably be considered to feel concern about a base shaving defect which may be caused by bringing the support into contact with the front end G. However, support B is liable to separate from front edge surface 10 by the flux of a coating solution reducing the contact pressure of support B to front end G to such an extent that the base may not be scraped away. Therefore, no base shaving defect is produced.

The invention will now be more detailed.

Fig. 1 is a transverse cross-sectional view of a coating apparatus relating to the invention, wherein front edge 1 is provided to the upstream side in the travelling direction of support B, center edge 2 to the midway, and back edge 3 to the downstream side, and first slot 5 is formed between front edge 1 and center edge 2 so as to be connected to first pocket 4 of a coating solution, and second slot 7 between center edge 2 and back edge 3 so as to be connected to second pocket 6 of the coating solution, respectively.

Front edge surface 10 of front edge 1, which is opposite to support B, has a straight portion in the travelling direction of support B. The length L of the straight portion is to be not longer than 1 mm. If it exceeds 1 mm, support B is forced to be floated by the pressure of the first coating solution. It is, therefore, feared that air is sucked into the interface between the layers.

In addition, at least one portion of center edge surface 20 and back edge surface 30 protrudes to the side of support B from an extended line $\ell_1$ of the straight portion. In the example shown in Fig. 1, both of center edge surface 20 and back edge surface 30 protrude from extended line $\ell_1$.

The term, "the terminal end of the front edge surface", stated in this invention, is defined as the terminal end which does not directly intersect the surface on the side of front edge 1 of first slot 5 and, when it has a curved or straight chamfered portion 10a as shown in Fig. 2, it is defined as a terminal end not covering such chamfered portion 10a. Such straight portion does not necessaryly have to occupy the whole front edge 10, but may have an introduction surface 10b between front edge surface 10 and the front surface 1a of front edge 1. In this case, an angle made between introduction surface 10b and the straight portion should preferably be within the range of 135 to 170 degrees, from the viewpoint of preventing air from being sucked into the interface between layers at the corner G.

Center edge surface 20 is not necessary to protrude wholly from extended line $\ell_1$, but only a part thereof may protrude therefrom. The same applies to back edge surface 30.

Center edge surface 20 and back edge surface 30 do not always have to be made arced or curved, but may be made straight. It is, however, preferable that at least the latter half portions of center edge surface 20 and back edge surface 30 should be made arced, for taking advantage that a layer thickness may be

4

excellently controlled by gradually thinning the thickness of a coating solution flowing from slot 5 or 7 to be applied to support B.

In such a case as described above, the radius of the curvature $R_1$ of center edge surface 20 should preferably be 2 mm < $R_1$ ≦ 25 mm. And, the radius of the curvature of back edge surface should preferably be 2 mm < $R_2$ ≦ 25 mm.

Length Lc of center edge surface 20 in travelling direction should preferably be $R_1$ / 20 to $R_1$ and, further, length Lb of back edge surface 30 in travelling direction should preferably be $R_2$ / 20 to $R_2$. Besides, it is preferable that back edge surface 30 protrudes to the side of support B from a tangent $\ell_2$ laid to terminal end Y of center edge surface 20, and that an angle $\theta_3$ made between tangent $\ell_2$ at terminal end Y of center edge surface 20 and a tangent $\ell_3$ extending from terminal end Y to back edge surface 30, such angle $\theta_3$ should have the following relation:

$$0° < \theta_3 < 38°$$

In Prior Art 2 as shown in Fig. 3, $\theta_3$ is preferable to be minus. According to the knowledge of the inventors, however, the first coating solution may be scraped at terminal end Y of center edge surface 20, when back edge surface 30 is below tangent $\ell_2$ at the terminal end Y, so that the coatability of the first layer may be impaired. It is, therefore, preferable that at least the latter half of back edge surface 30 should protrude from tangent $\ell_2$ at terminal end Y of center edge surface 20.

In a coating apparatus constituted as above, the first layer is coated with the first coating solution flowing from first slot 5 and the second layer with the second coating solution from the second slot 7, respectively, support B travelling in the direction of the arrow successively over front edge surface 10, center edge surface 20 and back edge surface 30.

The supports relating to the invention include, for example, those made of plastic films such as polyester film, a sheet of paper, laminated sheets thereof, and a metal sheet. The respective material does not matter, provided, it is flexible.

As the coating solutions, when using magnetic coating solutions and, particularly, those having a viscosity of 0,5 Pa.s (500 cps (measured one minute after running a B type viscosimeter at 60 rpm)), such coating solutions can remarkably display the effects of the invention. Besides the above, any photographic light sensitive coating solution may also be applicable.

[Examples]

Next, the effects of the invention will be clarified with reference to the following examples.

(Example 1)

A sheet of magnetic recording medium was prepared in the manner that a 15 μm-thick polyethyleneterephthalate film was used as the support thereof, and a magnetic coating solution comprising a lower and an upper layer coating solution each having the following composition was coated on the support so that the dried layer thicknesses were to be 3.0 μm and 1.0 μm, respectiely. The viscosities of the upper and lower layer coating solutions were 1,0 Pa.s (1000 cps) and 1,5 Pa.s (1500 cps), respectively.

The upper layer coating solution consisted of :

| • Co-containing magnetic iron oxide | 150 wt.parts |
|---|---|
| • Polyurethane resin | 10 wt.parts |
| • Vinyl chloride-vinyl acetate copolymer | 20 wt.parts |
| • Alumina powder | 10 wt.parts |
| • Myristic acid | 2 wt.parts |
| • Butyl stearate | 1 wt.part |
| • Polyisocyanate | 10 wt.parts |
| • Toluene | 200 wt.parts |
| • Methylethyl ketone | 200 wt.parts |
| • Carbon black | 10 wt.parts |

The lower layer coating solution consisted of :

5

| | |
|---|---|
| ● Co-containing magnetic iron oxide | 150 wt.parts |
| ● $\alpha$-$Al_2O_2$ | 8 wt.parts |
| ● Carbon black | 5 wt.parts |
| ● Vinyl chloride copolymer | 20 wt.parts |
| ● Polyurethane resin | 7 wt.parts |
| ● Butyl stearate | 1 wt.part |
| ● Myristic acid | 0.65 wt.parts |
| ● Stearic acid | 0.35 wt.parts |
| ● Methylethyl ketone | 150 wt.parts |
| ● Toluene | 150 wt.parts |
| ● Oleic acid | 0.65 wt.parts |
| ● Polyisocyanate | 10 wt.parts |

In this example, the coating apparatus relating to the invention and that relating to Prior Art 2 were used to check up the coatabilities, while changing their coating speeds. The results obtained are shown in Table 1.

Table 1

| Coating speed | Prior Art example | Inventive example |
|---|---|---|
| 100 m / min. | ○ | ○ |
| 200 m / min. | △ - ○ | ○ |
| 300 m / min. | △ | ○ |
| 400 m / min. | X | ○ |

In Table 1,

X : Frequent occurrence of base-shaving adhesion trouble
△: Some base-shaving adhesion troubles found
△ - ○ : Base-shaving adhesion troubles partly found
○ : Coatability, excellent

In checking them, the samples evaluated as X and △ were apparently found, with the naked eye, to be unevenly coated. Therefore, the coating operations were stopped after coating only about 100 meters. The other samples were coated not shorter than 500 meters.

In the examples of the invention, there specified as follows: L = 0.3 mm, $R_1$ = 8 mm, $R_2$ = 16 mm, Lc = Lb = 2.6 mm, and $\theta_3$ = 10°.

**Claims**

1. An apparatus for coating a flexible support (B) moving in a downstream direction, said apparatus comprising a first slot (5) between a front edge (1) and a center edge (2) downstream thereof, and a second slot (7) between said center edge (2) and a back edge (3) downstream thereof, wherein a coating solution is extruded continuously from each of said slots onto said flexible support (B) which passes continuously along a front edge surface (10) on said front edge (1), a center edge surface (20) on said center edge (2), and a back edge surface (30) on said back edge (3) in that order, wherein in a cross-section of said apparatus in said downstream direction, a straight line portion on said front edge surface (10), the surface extending to a downstream terminal end of said front edge (1), is provided; characterized in that
said straight line portion is not exceeding 1 mm in length in said downstream direction, a portion of at least one of said center edge surface (20) and said back edge surface (30) protrudes toward said support (B) beyond an extension line ($\ell_1$) from said straight line portion, and a portion of said back edge (3) protrudes toward said support (B) beyond a tangent line ($\ell_2$) to the downstream end of said center edge surface (20).

2. The coating apparatus as claimed in claim 1, wherein said center edge surface (20) is extending to protrude arcwise on the support side, and its radius of curvature $R_1$ satisfies the following expression:

$$2 \text{ mm} < R_1 \leq 25 \text{ mm}$$

3. The coating apparatus as claimed in claim 1, wherein the back edge surface (30) is extending to protrude arcwise on the support side, and its radius of curvature $R_2$ satisfies the following expression:

$$2 \text{ mm} < R_2 \leq 25 \text{ mm}$$

4. The coating apparatus as claimed in claim 1, wherein said center edge surface (20) has a length Lc in the direction of running of the support, and the length Lc satisfies the following expression:

$$R_1 / 20 \leq Lc \leq R_1$$

5. The coating apparatus as claimed in claim 1, wherein said back edge surface (30) has a length Lb in the direction of running of the support, and the length Lb satisfies the following expression:

$$R_2 / 20 \leq Lb \leq R_2$$

6. The coating apparatus as claimed in claim 1, wherein the back edge surface (30) protrudes from the tangent ($\ell_2$) at the terminal end (Y) of the center edge surface on the support side, and an angle $\theta_3$ made between the tangent ($\ell_2$) at the terminal end (Y) of the center edge surface (20) and a tangent ($\ell_3$) extending to the back edge surface (30) from the center edge surface end satisfies the following relation:

$$0° < \theta_3 < 38°$$

**Patentansprüche**

1. Vorrichtung zum Beschichten eines sich in einer Stromabrichtung bewegenden flexiblen (Schicht-)Trägers (B), wobei die Vorrichtung umfaßt: einen ersten Schlitz (5) zwischen einer Vorderkante (1) und einer stromab zu dieser angeordneten Mittelkante (2) und einen zweiten Schlitz (7) zwischen der Mittelkante (2) und einer stromab zu dieser gelegenen Hinterkante (3), wobei eine Beschichtungslösung kontinuierlich aus jedem der Schlitze auf den flexiblen Träger (B) extrudiert wird, der - in dieser Reihenfolge - fortlaufend längs einer Vorderkantenfläche (10) an der Vorderkante (1), einer Mittelkantenfläche (20) an der Mittelkante (2) und einer Hinterkantenfläche (30) an der Hinterkante (3) vorbeiläuft, wobei in einem Querschnitt der Vorrichtung in der Stromabrichtung ein geradliniger Abschnitt an der Vorderkantenfläche (10), die sich zu einem stromabseitigen Endteil der Vorderkante (1) erstreckt, vorgesehen ist,
dadurch gekennzeichnet, daß
der geradlinige Abschnitt in der Stromabrichtung eine Länge von nicht mehr als 1 mm aufweist, ein Abschnitt mindestens einer der Mittelkantenfläche (20) und der Hinterkantenfläche (30) über eine Verlaufs- bzw. Projektionslinie ($l_1$) vom geradlinigen Abschnitt hinaus in Richtung auf den Träger (B) vorsteht und ein Abschnitt der Hinterkante (3) über eine Tangentenlinie ($l_2$) zum (am) stromabseitigen Ende des Mittelkantenfläche (20) hinaus in Richtung auf den Träger (B) vorsteht.

2. Beschichtungsvorrichtung nach Anspruch 1, wobei die Mittelkantenfläche (20) so verläuft, daß sie an der Trägerseite bogenförmig vorsteht, und ihr Krümmungsradius $R_1$ der folgenden Bedingung genügt:

$$2 \text{ mm} < R_1 \leq 25 \text{ mm}$$

3. Beschichtungsvorrichtung nach Anspruch 1, wobei die Hinterkantenfläche (30) so verläuft, daß sie an der Trägerseite bogenförmig vorsteht, und ihr Krümmungsradius $R_2$ der folgenden Bedingung genügt:

$$2 \text{ mm} < R_2 \leq 25 \text{ mm}$$

**4.** Beschichtungsvorrichtung nach Anspruch 1, wobei die Mittelkantenfläche (20) in der Laufrichtung des Trägers eine Länge Lc aufweist und die Länge Lc der folgenden Bedingung genügt:

$$R_1 / 20 \leqq Lc \leqq R_1$$

**5.** Beschichtungsvorrichtung nach Anspruch 1, wobei die Hinterkantenfläche (30) in der Laufrichtung des Trägers eine Länge Lb aufweist und die Länge Lb der folgenden Bedingung genügt:

$$R_2 / 20 \leqq Lb \leqq R_2$$

**6.** Beschichtungsvorrichtung nach Anspruch 1, wobei die Hinterkantenfläche (30) über die Tangente ($l_2$) am Endteil (Y) der Mittelkantenfläche an der Trägerseite hinaus vorsteht und ein Winkel $\theta_3$ zwischen der Tangente ($l_2$) am Endteil (Y) der Mittelkantenfläche (20) und einer Tangente ($l_3$), die zur Hinterkantenfläche (30) vom Mittelkantenflächenende verläuft, der folgenden Bedingung genügt:

$$0° < \theta_3 < 38°$$

**Revendications**

**1.** Appareil pour revêtir un support flexible (B) se déplaçant en direction de l'aval, ledit appareil comprenant une première fente (5) entre un bord avant (1) et un bord central (2) en aval de ce dernier, et une seconde fente (7) entre ledit bord central (2) et un bord arrière (3) en aval de ce dernier, dans lequel une solution de revêtement est extrudée de façon continue de chacune desdites fentes jusque sur ledit support flexible (B) qui passe de façon continue le long d'une surface (10) de bord avant sur ledit bord avant (1), une surface de bord centrale (20) sur ledit bord central (2), et une surface (30) de bord arrière sur ledit bord arrière (3), dans cet ordre, et dans lequel, dans une coupe transversale de cet appareil dans ladite direction d'aval, une portion rectiligne est formée sur ladite surface (10) de bord avant, cette portion s'étendant jusqu'à une extrémité terminale d'aval dudit bord avant (1);
   caractérisé en ce que :
ladite portion rectiligne ne dépasse pas 1 mm de longueur dans ladite direction d'aval, une portion d'au moins une desdites surfaces (20) de bord central et surface (30) de bord arrière fait saillie vers ledit support (B) au-delà d'une ligne de prolongement ($l_1$) depuis ladite portion rectiligne, et une portion dudit bord arrière (3) fait saillie vers ledit support (B) au-delà d'une tangente ($l_2$) jusqu'à l'extrémité d'aval de ladite surface (20) de bord central.

**2.** Appareil de revêtement selon la revendication 1, dans lequel ladite surface (20) de bord central s'étend de manière à faire saillie de façon arquée sur le côté support, et son rayon de courbure $R_1$ satisfait à l'expression suivante :

$$2mm < R_1 \leqq 25mm$$

**3.** Appareil de revêtement selon la revendication 1, dans lequel la surface (30) de bord arrière s'étend de manière à faire saillie de façon arquée sur le côté support, et son rayon de courbure $R_2$ satisfait à l'expression suivante :

$$2 \, mm < R_2 \leqq 25 \, mm$$

**4.** Appareil de revêtement selon la revendication 1, dans lequel ladite surface (20) de bord central a une longueur Lc dans la direction de déplacement du support, et la longueur Lc satisfait à l'expression suivante :

$$R_1 / 20 \leqq Lc \leqq R_1$$

**5.** Appareil de revêtement selon la revendication 1, dans lequel ladite surface (30) de bord arrière a une longueur Lb dans la direction de déplacement du support, et la longueur Lb satisfait à l'expression suivante :

$$R_2 / 20 \leqq Lb \leqq R_2$$

6. Appareil de revêtement selon la revendication 1, dans lequel la surface (30) de bord arrière fait saillie depuis la tangente ($\ell_2$) à l'extrémité terminale (Y) de la surface de bord central sur le côté de support, et un angle $\theta_3$ formé entre la tangente ($\ell_2$) à l'extrémité (Y) de la surface (20) de bord central et une tangente ($\ell_3$)s'étendant jusqu'à la surface (30) de bord arrière depuis l'extrémité de la surface de bord central satisfait à la relation suivante

$$0° < \theta < 38°$$

# Fig. 1

# Fig. 2

# Fig. 3